# EUROPEAN PATENT APPLICATION

(11) **EP 4 351 216 A1**
(43) Date of publication of application: **10.04.2024**
(21) Application number: 23200100.8
(22) Date of filing: 27.09.2023
(51) Int. Cl.: H04W 36/00, H04W 36/36

(54) **METHODS OF HANDLING CONDITIONAL HANDOVER WITH CANDIDATE SECONDARY CELL GROUP, SOURCE MASTER NODE, AND USER EQUIPMENT**

(30) Priority: 07.10.2022 US 202263413971 P; 21.09.2023 US 202318472189
(71) Applicant: Acer Incorporated, New Taipei City 221 (TW)
(72) Inventor: HUANG, Nai-Lun, c/o Acer Incorporated, New Taipei City 221, Taiwan ( R.O.C.) (TW)
(74) Representative: Haseltine Lake Kempner LLP

(57) **Abstract**

The application relates to handling conditional handover with a candidate secondary cell group, SCG, in a way that avoids delaying CHO execution, while taking the radio link conditions of candidate PSCells into consideration, to solve the technical problem of delaying CHO execution until one of the associated PSCells' execution conditions is met. The disclosure is directed to corresponding methods, source master node, and user equipment.

Accordingly, the source MN determines (S1110) a first execution condition of a first candidate primary cell, PCell; receives (S1120), from a first candidate MN a parameter of a second execution condition of a first candidate primary SCG cell, PSCell; and transmits (S1130) to a user equipment, UE, a configuration message which comprises the first execution condition of the first candidate PCell.

The UE then determines to perform a conditional handover to the first candidate PCell, if the first execution condition of the first candidate PCell in the received configuration message is met.

The configuration message may further comprise the second execution condition of the first candidate PSCell, to enable the UE to also determine whether to change a serving PSCell to the first candidate PSCell or add the first candidate PSCell as the serving PSCell.

## Description

### BACKGROUND

### 1. Field of the Invention

The present disclosure generally relates to a field of communication, in particular, to a method of handling conditional handover (CHO) with a candidate secondary cell group (SCG), a source master node (MN), and a user equipment (UE).

### 2. Description of Related Art

In the 5G communication system, UE may adopt a dual connectivity (DC) architecture which may allow the UE to be connected to two nodes and use radio resources provided by different radio access technologies (RATs) (e.g., long term evolution (LTE) or new radio (NR)) at the same time. Specifically, the UE may be connected to a base station serving as a master node (MN) and another base station serving as a secondary node (SN). In the DC architecture, the UE may be connected to a master cell group (MCG) corresponding to the master node and a secondary cell group (SCG) corresponding to the secondary node. The MCG and the SCG may respectively include multiple service cells aggregating based on the carrier aggregation (CA) technology. The MCG may include a primary cell (PCell) and a secondary cell (SCell). The SCG may include a primary secondary cell (PSCell) and a secondary cell (SCell). In some documents, the term "PSCell" can also be the abbreviation of "primary SCG cell".

3rd Generation Partnership Project (3GPP) release 17 (Rel-17) specifies CHO with target source node (T-SN). However, this alone may not be sufficient to optimise DC mobility, as the radio link quality of the target PSCell is not considered.

In addition, delaying CHO execution until one of the associated PSCells' execution conditions is met is not useful as it can lead to MCG radio link failure. Therefore, it is crucial for skilled person in the art to develop a mechanism that avoids delaying CHO execution while taking the radio link conditions of candidate PSCells into consideration.

### SUMMARY OF THE INVENTION

Accordingly, the disclosure is directed to a method of handling conditional handover with a candidate secondary cell group (SCG), a source master node, and a user equipment, which may be used to solve the above technical problems. The invention is set out in the appended set of claims.

The embodiments of the disclosure provide a method of handling conditional handover with a candidate secondary cell group (SCG), applied to a source master node (MN). The method includes: determining, by the source MN, a first execution condition of a first candidate primary cell (PCell); and receiving, by the source MN from a first candidate MN, a parameter of a second execution condition of a first candidate primary SCG cell (PSCell).

The embodiments of the disclosure provide a source master node (MN), including a transceiver and a processor. The processor is coupled to the transceiver and performs: determining a first execution condition of a first candidate primary cell (PCell); controlling the transceiver to receive, from a first candidate MN, a parameter of a second execution condition of a first candidate primary secondary cell group (SCG) cell (PSCell); and transmitting a configuration message to a user equipment (UE), wherein the configuration message comprises the first execution condition of the first candidate PCell.

The embodiments of the disclosure provide a method of handling conditional handover with a candidate secondary cell group (SCG), applied to a user equipment (UE). The method includes: receiving, by the UE, a configuration message, wherein the configuration message comprises at least one first execution condition of at least one candidate primary cell (PCell), wherein the at least one candidate PCell comprises a first candidate PCell, and the first candidate PCell belongs to a first candidate MN

The embodiments of the disclosure provide a user equipment (UE), including a transceiver and a processor. The processor is coupled to the transceiver and performs: controlling the transceiver to receive a configuration message, wherein the configuration message comprises at least one first execution condition of at least one candidate primary cell (PCell), wherein the at least one candidate PCell comprises a first candidate PCell, and the first candidate PCell belongs to a first candidate MN; and if a first execution condition of the first candidate PCell is met, synchronising to the first candidate PCell and transmitting a radio resource control (RRC) reconfiguration complete message to the first candidate MN.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1 shows a functional block diagram of communication device according to an embodiment of the disclosure.
FIG. 2 shows a flow chart of the method of handling CHO with a candidate SCG according to an embodiment of the disclosure.
FIG. 3A shows a schematic diagram according to an embodiment of the disclosure.
FIG. 3B shows a schematic diagram according to an embodiment of the disclosure.
FIG. 4 shows a schematic diagram according to an embodiment of the disclosure.
FIG. 5A shows a first schematic diagram according to FIG. 4.
FIG. 5B shows a second schematic diagram according to FIG. 4.
FIG. 5C shows a third schematic diagram according to FIG. 4.
FIG. 5D shows a fourth schematic diagram according to FIG. 4.
FIG. 6A shows a schematic diagram according to an embodiment of the disclosure.
FIG. 6B shows another schematic diagram according to FIG. 6A.
FIG. 7A shows a schematic diagram according to an embodiment of the disclosure.
FIG. 7B shows another schematic diagram according to FIG. 7A.
FIG. 8 shows a schematic diagram according to an embodiment of the disclosure.
FIG. 9A shows a first schematic diagram according to FIG. 8.
FIG. 9B shows a second schematic diagram according to FIG. 8.
FIG. 9C shows a third schematic diagram according to FIG. 8.
FIG. 9D shows a fourth schematic diagram according to FIG. 8.
FIG. 10 shows a schematic diagram according to an embodiment of the disclosure.
FIG. 11 shows a flow chart of the method of handling conditional handover with a candidate SCG according to an embodiment of the disclosure.
FIG. 12 shows a flow chart of the method of handling conditional handover with a candidate SCG according to another embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

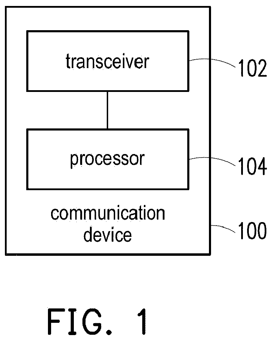

See FIG. 1, which shows a functional block diagram of communication device according to an embodiment of the disclosure.
In FIG. 1, the communication device 100 includes a transceiver 102 and a processor 104. The transceiver 102 may be configured for transmitting and receiving signals from other devices within a coverage area thereof. The transceiver 102 is capable of performing analog to digital signal conversion (ADC), digital to analog signal conversion (DAC), modulation, demodulation, signal amplification, low-pass filtering, and bandpass filtering. For example, the transceiver 102 is configured to provide information on a received signal to the processor 104, modulating data received from the processor 104 into a modulated signal, and transmitting the modulated signal to other devices.

In some embodiments, the communication device 100 may further include other elements, such as an antenna module for implementing the aforementioned functions of the transceiver 102 and the processor 104.

The processor 104 may be coupled with the transceiver 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the communication device 100 can be used to implement devices such as UE and/or communication nodes. In some embodiments, the communication nodes in the disclosure may include target master nodes (T-MN), source master nodes (S-MN), target secondary nodes (T-SN) and/or source secondary nodes (S-SN), and the meanings of each communication node can be referred to the specification of the associated communication standards (e.g., 3GPP Rel-17/Rel-18) but the disclosure is not limited thereto. In the embodiments of the disclosure, the T-MN and T-SN can be referred to as candidate T-MN and candidate T-SN, respectively.

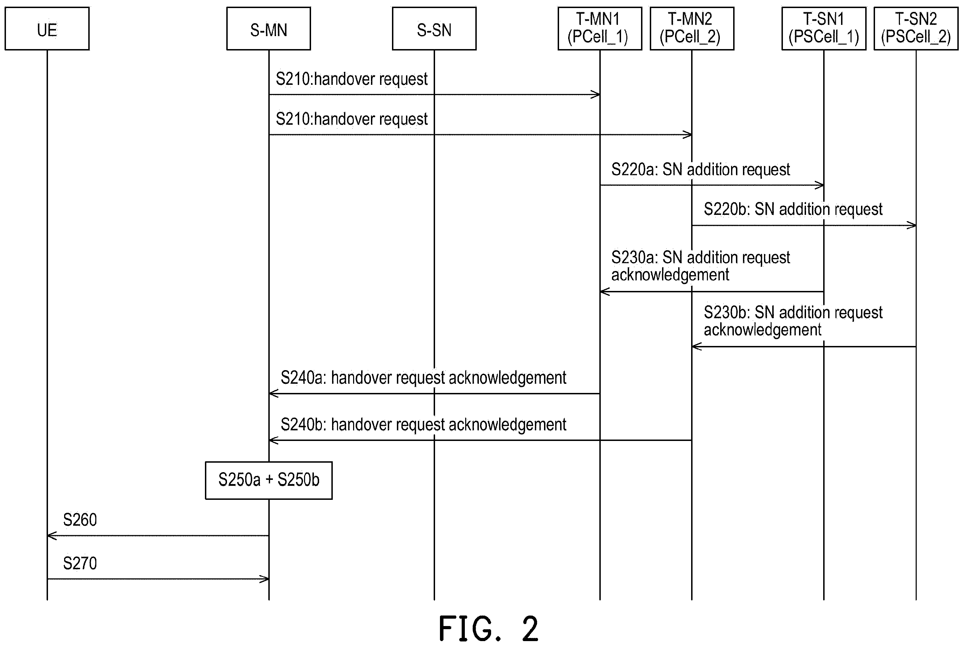

See FIG. 2, which shows a flow chart of the method of handling CHO with a candidate SCG according to an embodiment of the disclosure. In the embodiment, the candidate SCG may be conditionally-configured, but the disclosure is not limited thereto.

In FIG. 2, it is assumed that the UE with DC is currently served by the S-MN and the S-SN. In one embodiment, if the S-MN determines that the UE needs to be handed over to other MNs, the S-MN can send a handover request associated with the UE in step S210.

In FIG. 2, the S-MN may be assumed to send the handover request to, for example, the T-MN1 (which can be understood as a first candidate MN) and the T-MN2 (which can be understood as a second candidate MN), which respectively include PCell_1 (which can be understood as a first candidate PCell) and PCell_2 (which can be understood as a second candidate PCell). That is, the PCell_1 and PCell_2 respectively belong to the T-MN1 and the T-MN2.

In response to the handover request, in step S220a, the T-MN1 may send an SN addition request to the T-SN1 belonging to PSCell_1 (which can be understood as a first candidate PSCell) for inviting the T-SN1 to be the SN of the T-MN1. Likewise, in step S220b, the T-MN2 may send an SN addition request to the T-SN2 belonging to PSCell_2 (which can be understood as a second candidate PSCell) for inviting the T-SN2 to be the SN of the T-MN2.

In the embodiment, it is assumed that the T-SN1 agrees to be the SN of the T-MN1, and hence the T-SN1 may send the SN addition request acknowledgement to the T-MN1 in step S230a.

In the embodiments of the disclosure, the situation where the T-SN1 agrees to be the SN of the T-MN1 can be referred to as the T-MN1 and the T-SN1 are associated with each other.

In the embodiment, the SN addition request acknowledgement in step S230a may include a first configuration of the PSCell_1, wherein the first configuration of the PSCell_1 may include, for example, the radio bearer configurations or the like. Likewise, it is assumed that the T-SN2 agrees to be the SN of the T-MN2, and hence the T-SN2 may send the SN addition request acknowledgement to the T-MN2 in step S230b.

In the embodiments of the disclosure, the situation where the T-SN2 agrees to be the SN of the T-MN2 can be referred to as the T-MN2 and the T-SN2 are associated with each other.

In the embodiment, the SN addition request acknowledgement in step S230b may include a first configuration of the PSCell_2, wherein the first configuration of the PSCell_2 may include, for example, the radio bearer configurations or the like.

In step S240a, the T-MN1 sends a handover request acknowledgement corresponding to the handover request in step S210 to the S-MN. In the embodiment, the handover request acknowledgement in step S240a may include a second configuration of the PCell_1 and the first configuration of the PSCell_1 (which was received by the T-MN1 in step S230a). In various embodiments, the second configuration of the PCell_1 may include the radio bearer configurations or the like, but the disclosure is not limited thereto.

In one embodiment, after receiving the handover request acknowledgement in step S240a, the S-MN performs step S250a to determine a first execution condition of the PCell_1. In one embodiment, the S-MN can determine the first execution condition of the PCell_1 based on the second configuration of the PCell_1.

In the embodiments of the disclosure, an execution condition refers to the criteria or standards that trigger the execution of the handover action. Typical execution conditions are based on network performance, service quality, signal strength, and other relevant indicators. When the execution condition(s) is met, the UE performs a handover, transferring the UE's connection from one base station (or cell) to another.

In one embodiment, the determined first execution condition of the PCell_1 can be provided to the UE, and the UE may determine to perform the handover action to PCell_1 in response to determining that the first execution condition of the PCell_1 is met, but the disclosure is not limited thereto.

In one embodiment, when the T-MN1 obtains the first configuration of PSCell_1 from the SN addition request acknowledgement in step S230a, the T-MN1 can determine a second execution condition of the PSCell_1 according to the first configuration of PSCell_1.

In one embodiment, the determined second execution condition of the PSCell_1 can be provided to the UE, and the UE may determine to perform the handover action to PSCell_1 in response to determining that the second execution condition of the PSCell_1 is met, but the disclosure is not limited thereto.

In one embodiment, after determining the second execution condition of the PSCell_1, the T-MN1 can provide a parameter of the second execution condition of the PSCell_1 via the handover request acknowledgement in step S240a. That is, the S-MN receives the parameter of the second execution condition of the PSCell_1 via the handover request acknowledgement in step S240a.

In one embodiment, the T-MN1 can transmit the first configuration of the PSCell_1 to the S-MN via, for example, the handover request acknowledgement in step S240a.

In some embodiments, the parameter of the second execution condition of the PSCell_1 includes, for example, at least one of a threshold value associated with a trigger quantity and an offset value, wherein the trigger quantity comprises at least one of a Reference Signal Received Power (RSRP), a Reference Signal Received Quality (RSRQ), and a Signal to Interference plus Noise Ratio (SINR), but the disclosure is not limited thereto.

In step S240b, the T-MN2 sends a handover request acknowledgement corresponding to the handover request in step S210 to the S-MN. In the embodiment, the handover request acknowledgement in step S240b may include a second configuration of the PCell_2 and the first configuration of the PSCell_2 (which was received by the T-MN2 in step S230b). In various embodiments, the second configuration of the PCell_2 may include the radio bearer configurations or the like, but the disclosure is not limited thereto.

In one embodiment, after receiving the handover request acknowledgement in step S240b, the S-MN performs step S250b to determine a first execution condition of the PCell_2. In one embodiment, the S-MN can determine the first execution condition of the PCell_2 based on the second configuration of the PCell_2.

In one embodiment, the determined first execution condition of the PCell_2 can be provided to the UE, and the UE may determine to perform the handover action to PCell_2 in response to determining that the first execution condition of the PCell_2 is met, but the disclosure is not limited thereto.

In one embodiment, when the T-MN2 obtains the first configuration of PSCell_2 from the SN addition request acknowledgement in step S230b, the T-MN2 can determine a second execution condition of the PSCell_2 according to the first configuration ofPSCell_2.

In one embodiment, the determined second execution condition of the PSCell_2 can be provided to the UE, and the UE may determine to perform the handover action to PSCell_2 in response to determining that the second execution condition of the PSCell_2 is met, but the disclosure is not limited thereto.

In one embodiment, after determining the second execution condition of the PSCell_2, the T-MN2 can provide a parameter of the second execution condition of the PSCell_2 via the handover request acknowledgement in step S240b. That is, the S-MN receives the parameter of the second execution condition of the PSCell_2 via the handover request acknowledgement in step S240b.

In one embodiment, the T-MN2 can transmit the first configuration of the PSCell_2 to the S-MN via, for example, the handover request acknowledgement in step S240b.

In some embodiments, the parameter of the second execution condition of the PSCell_2 includes, for example, at least one of a threshold value associated with a trigger quantity and an offset value, wherein the trigger quantity comprises at least one of a Reference Signal Received Power (RSRP), a Reference Signal Received Quality (RSRQ), and a Signal to Interference plus Noise Ratio (SINR), but the disclosure is not limited thereto.

In one embodiment, in step S260, the S-MN can provide the first execution of the PCell_1 and/or PCell_2 to the UE. In addition, the S-MN can further provide the second execution of the PSCell_1 and/or PSCell_2 to the UE in step S260.

In one embodiment, the S-MN may provide the first execution of the PCell_1 and/or PCell_2 to the UE via transmitting a configuration message including the first execution of the PCell_1 and/or PCell_2 to the UE. In addition, the configuration message may further carry the second execution of the PSCell_1 and/or PSCell_2.

In one embodiment, the configuration message may be a radio resource control (RRC) reconfiguration message, but the disclosure is not limited thereto.

In one embodiment, after the UE receives the configuration message, the UE may transmit a complete message back to the S-MN in step S270. That is, the S-MN receives the complete message from the UE. In some embodiments, the complete message may be an RRC complete message, but the disclosure is not limited thereto.

In one embodiment, if the S-MN has received the first configuration of the PSCell_1 from the T-MN1 and/or the first configuration of the PSCell_2 from the T-MN2, the S-MN may further include the first configuration of the PSCell_1 and/or the first configuration of the PSCell_2 in the configuration message, but the disclosure is not limited thereto.

In one embodiment, the first execution condition and the second execution condition in the configuration message enable the UE to determine whether to perform a conditional handover to the corresponding candidate PCell and whether to change a serving PSCell to the corresponding candidate PSCell or add the corresponding candidate PSCell as the serving PSCell.

For example, if the UE determines that the first execution condition of the PCell_1 is met, the UE may perform the conditional handover to the PCell_1. Additionally or alternatively, if the UE determines that the second execution of the PSCell_1 is met, the UE may change a serving PSCell to the PSCell_1 or add the PSCell_1 as the serving PSCell.

For another example, if the UE determines that the first execution condition of the PCell_2 is met, the UE may perform the conditional handover to the PCell_2. Additionally or alternatively, if the UE determines that the second execution of the PSCell_2 is met, the UE may change a serving PSCell to the PSCell_2 or add the PSCell_2 as the serving PSCell.

Accordingly, after obtaining the first execution condition and the second execution condition in the configuration message, the UE can take the radio link conditions of candidate PSCells into consideration in the procedure of determining whether to perform the conditional handover.

In the embodiments of the disclosure, after the UE receives the configuration message, the UE can evaluate the first execution condition of the PCell_1 and the second execution condition of the PSCell_1. For example, the UE can determine whether the first execution condition of the PCell_1 and/or the second execution condition of the PSCell_1 is met. In the present disclosure, evaluating a condition may include determining whether the condition is met.

Likewise, the UE can evaluate the first execution condition of the PCell_2 and the second execution condition of the PSCell_2. For example, the UE can determine whether the first execution condition of the PCell_2 and/or the second execution condition of the PSCell_2 is met.

In one embodiment, if the first execution condition of the PCell_I is met, the UE can synchronise to the PCell_1 and transmit an RRC reconfiguration complete message to the T-MN1. In another embodiment, if the first execution condition of the PCell_2 is met, the UE can synchronise to the PCell_2 and transmit an RRC reconfiguration complete message to the T-MN2, but the disclosure is not limited thereto.

In one embodiment, if the first execution condition of the PCell_I is met and the configuration message does not include at least one second execution condition of the PSCell_1 and/or the PSCell_2 or no second execution condition of any of the PSCell_1 and/or the PSCell_2 is met, the UE can synchronise to the PCell_1 and transmit an RRC reconfiguration complete message to the T-MN1.

In another embodiment, if the first execution condition of the PCell_2 is met and the configuration message does not include at least one second execution condition of the PSCell_1 and/or the PSCell_2 or no second execution condition of any of the PSCell_1 and/or the PSCell_2 is met, the UE can synchronise to the PCell_2 and transmit an RRC reconfiguration complete message to the T-MN2.

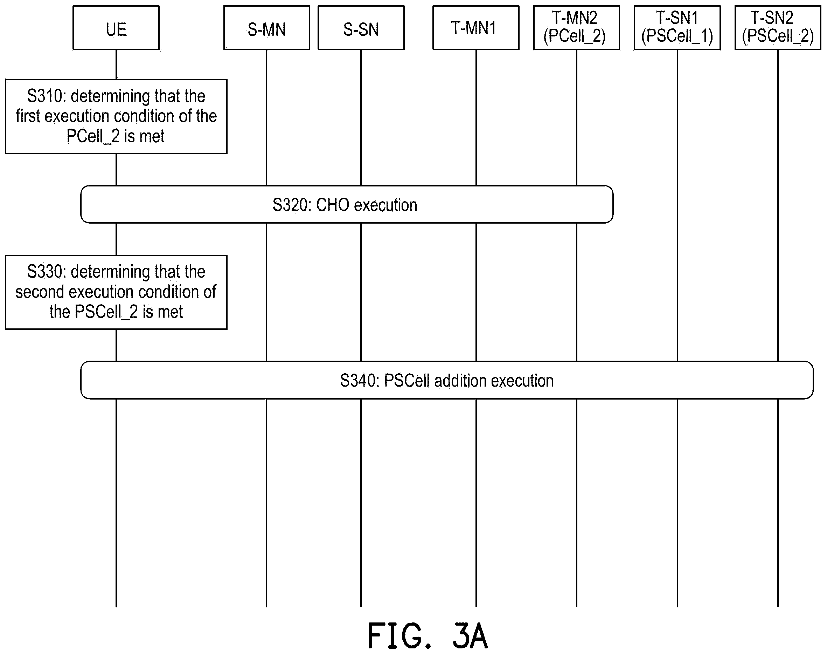

See FIG. 3A, which shows a schematic diagram according to an embodiment of the disclosure. In FIG. 3A, it is assumed that the UE determines that the first condition of the PCell_2 is met in step S310. In this case, the UE performs CHO execution in step S320 via, for example, synchronising to the PCell_2 and transmitting the RRC reconfiguration message to the T-MN2.

In addition, the UE may determine that the second execution condition of the PSCell_2 is met in step S330. In this case, the UE performs PSCell addition execution in step S340. That is, the UE may add the PSCell_2 as the corresponding PSCell, such that the UE may implement the function of DC with the PCell_2 and the PSCell_2.

In some embodiments, if the second execution condition of the PSCell_1 is met and no first execution condition of any of the PCell_1 and the PCell_2 is met, the UE may evaluate the first execution condition of the PCell_1 and the PCell_2 and the second execution condition of the PSCell_1 and PSCell_2. Likewise, if the second execution condition of the PSCell_2 is met and no first execution condition of any of the PCell_I and the PCell_2 is met, the UE may evaluate the first execution condition of the PCell_1 and the PCell_2 and the second execution condition of the PSCell_1 and PSCell_2.

In one embodiment, if the first execution condition of the PCell_I is met and the second execution condition of the PSCell_1 is met, the UE can apply the first configuration of the PSCell_1 and the second configuration of the PCell_1. Likewise, if the first execution condition of the PCell_2 is met and the second execution condition of the PSCell_2 is met, the UE can apply the first configuration of the PSCell_2 and the second configuration of the PCell_2.

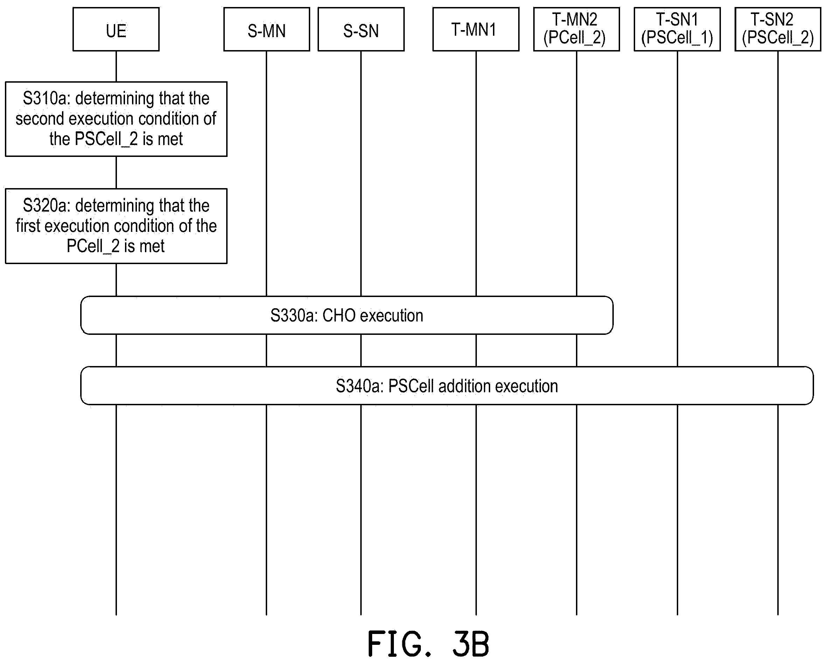

See FIG. 3B, which shows a schematic diagram according to an embodiment of the disclosure. In FIG. 3B, it is assumed that the UE determines that the second execution condition of the PSCell_2 is met in step S310a. In this case, since no first execution condition of any of the PCell_1 and the PCell_2 is met, the UE may evaluate the first execution condition of the PCell_1 and the PCell_2 and the second execution condition of the PSCell_1 and PSCell_2.

In FIG. 3B, it is assumed that the UE determines that the first execution condition of the PCell_2 is met. In this case, the UE performs CHO execution in step S330a via, for example, synchronising to the PCell_2 and transmitting the RRC reconfiguration message to the T-MN2.

Next, the UE performs PSCell addition execution in step S340a. That is, the UE may add the PSCell_2 as the corresponding PSCell, such that the UE may implement the function of DC with the PCell_2 and the PSCell_2. In one embodiment, step S340a can be performed if the UE determines that the second execution condition of the PSCell_2 is still met after step S320a and/or step S330a, but the disclosure is not limited thereto.

In addition, since the first execution condition of the PCell_2 and the second execution condition of the PSCell_2 are met, the UE may apply the first configuration of the PSCell_2 and the second configuration of the PCell_2, but the disclosure is not limited thereto.

In some embodiments of the disclosure, the UE can determine whether a notification condition of a (specific) candidate PSCell among the PSCell_1 and PSCell_2 is met. If the notification condition of the (specific) candidate PSCell among the PSCell_1 and the PSCell_2 is met, the UE may provide a cell identity (e.g., a physical cell identity (PCI)) of the (specific) candidate PSCell.

In various embodiments, the notification condition may be defined based on events A3, A4, and/or A5 as specified in the 3GPP specifications.

In the embodiment where the notification condition of the candidate PSCell is defined by event A4, the UE may determine whether the link quality of the candidate PSCell becomes better than a threshold value associated with the trigger quantity (e.g., RSRP, RSRQ, SINR, etc.). If yes, the UE may determine that the notification condition of the candidate PSCell is met; if not, the UE may determine that the notification of the candidate PSCell is not met.

In the embodiment where the notification condition of the candidate PSCell is defined by event A5, the UE may determine whether the link quality of the candidate PSCell becomes better than a threshold value associated with the trigger quantity (e.g., RSRP, RSRQ, SINR, etc.) than the serving PSCell by an offset value. If yes, the UE may determine that the notification condition of the candidate PSCell is met; if not, the UE may determine that the notification of the candidate PSCell is not met.

In the embodiment where the notification condition of the candidate PSCell is defined by event A3, the UE may determine whether the link quality of the candidate PSCell becomes better than a first threshold value associated with the trigger quantity (e.g., RSRP, RSRQ, SINR, etc.) and the link quality of the serving PSCell is worse than a second threshold value associated with the trigger quantity. If yes, the UE may determine that the notification condition of the candidate PSCell is met; if not, the UE may determine that the notification of the candidate PSCell is not met.

In one embodiment, if the first execution condition of the PCell_1 is met, the UE can synchronise to the PCell_1 and transmit an RRC reconfiguration complete message to the T-MN1. Likewise, if the first execution condition of the PCell_2 is met, the UE can synchronise to the PCell_2 and transmit an RRC reconfiguration complete message to the T-MN2. In addition, in response to the notification condition of the candidate PSCell (e.g., the PSCell_1 or the PSCell_2) is met, the UE may include the cell identity of the candidate PSCell in the RRC reconfiguration complete message.

In one embodiment, the notification condition can be shared by the PSCell_1 and PSCell_2. In another embodiment, the notification condition of each of the PSCell_1 and the PSCell_2 can be dedicated. In this case, the notification condition of the candidate PSCell can be a dedicated condition to the candidate PSCell, wherein the dedicated condition includes the second execution condition of the candidate PSCell, but the disclosure is not limited thereto.

In one embodiment, the RRC reconfiguration complete message may further include the notification condition of the candidate PSCell if the notification condition is the dedicated condition to the candidate PSCell.

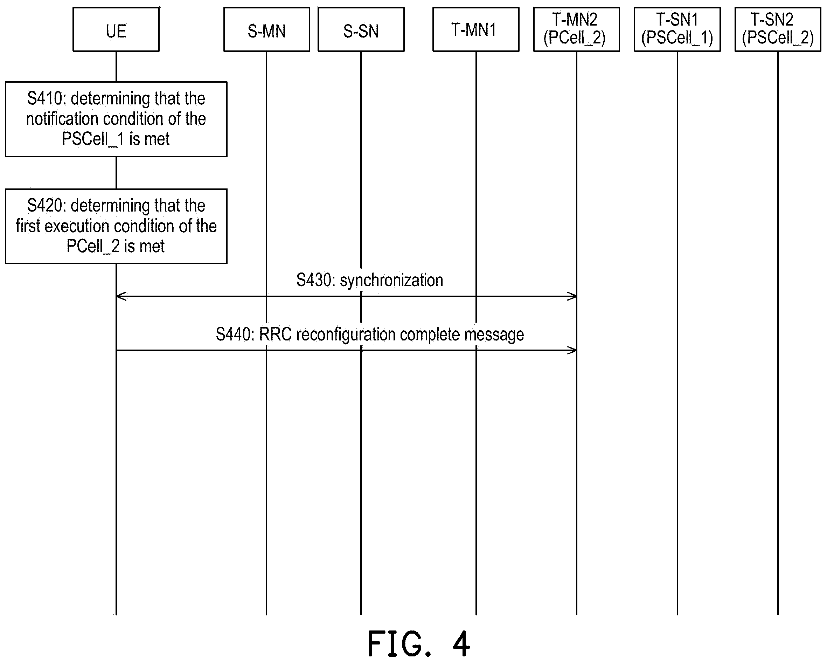

See FIG. 4, which shows a schematic diagram according to an embodiment of the disclosure. In FIG. 4, it is assumed that the UE determines that the notification condition of the PSCell_1 is met in step S410. That is, the PSCell_1 can be regarded as the considered candidate PSCell in FIG. 4.

Next, the UE may determine that the first execution condition of the PCell_2 is met in step S420. In this case, the UE can synchronise to the PCell_2 in step S430 and transmit an RRC reconfiguration complete message to the T-MN2 in step S440.

In the embodiment, the RRC reconfiguration complete message may include the cell identity of the candidate PSCell (e.g., the PSCell_1). In one embodiment, if the UE determines that the notification condition of the candidate PSCell (e.g., PSCell_1) is still met after step S420, the UE may use the RRC reconfiguration complete message to carry the cell identity of the candidate PSCell (e.g., PSCell_1), but the disclosure is not limited thereto. In another embodiment, if the UE determines that the notification condition of the candidate PSCell (e.g., PSCell_1) is still met during performing step S420, the UE may use the RRC reconfiguration complete message to carry the cell identity of the candidate PSCell (e.g., PSCell_1), but the disclosure is not limited thereto.

In one embodiment, if the UE further determines that the notification condition of the PSCell_2 is also met before step S420, the UE can further regard the PSCell_2 as another candidate PSCell and include the cell identity thereof in the RRC reconfiguration complete message, but the disclosure is not limited thereto.

In one embodiment, if the notification condition is shared by the PSCell_1 and PSCell_2, the RRC configuration message may or may not include the notification condition met by the candidate PSCell.

In another embodiment, if the notification condition of each of the PSCell_1 and PSCell_2 is dedicated, the RRC reconfiguration complete message may include the corresponding notification condition of the candidate PSCell, such as the notification condition dedicated to the PSCell_1.

In the embodiments of the disclosure, after the T-MN2 receives the RRC reconfiguration complete message from the UE in step S440, the T-MN2 may know that the candidate PSCell whose notification condition is met is the PSCell_1.

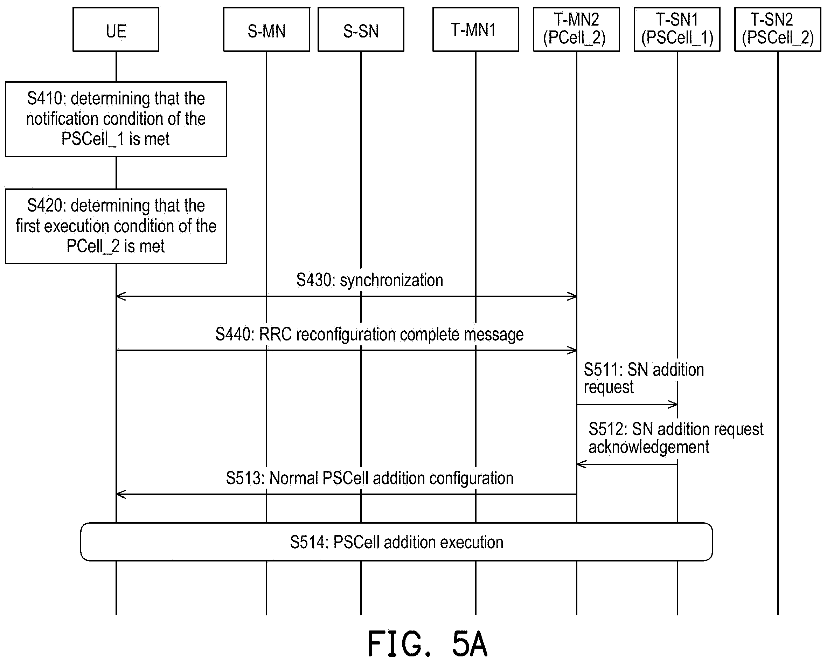

As mentioned in the above, the PSCell associated with the PCell_2 is the PSCell_2 instead of the PSCell_1 indicated in the RRC reconfiguration complete message. In this case, the T-MN2 may determine whether to invite the PSCell_1 to be the SN of the T-MN2, and the T-MN2 may perform subsequent operations according to the corresponding determination result, which would be discussed with FIG. 5A to FIG. 5D.

See FIG. 5A, which shows a first schematic diagram according to FIG. 4. In FIG. 5A, it is assumed that the T-MN2 determines to invite the PSCell_1 to be the SN of the T-MN2, and hence the T-MN2 may send the SN addition request to the PSCell_1 in step S511.

Assuming that the PSCell_1 agrees to be the SN of the T-MN2, the PSCell 1 may send the SN addition request acknowledgement to the T-MN2 in step S512. In this case, the T-MN2 may provide the corresponding normal PSCell addition configuration to the UE in step S513, and the UE may perform the PSCell addition execution in step S514 accordingly.

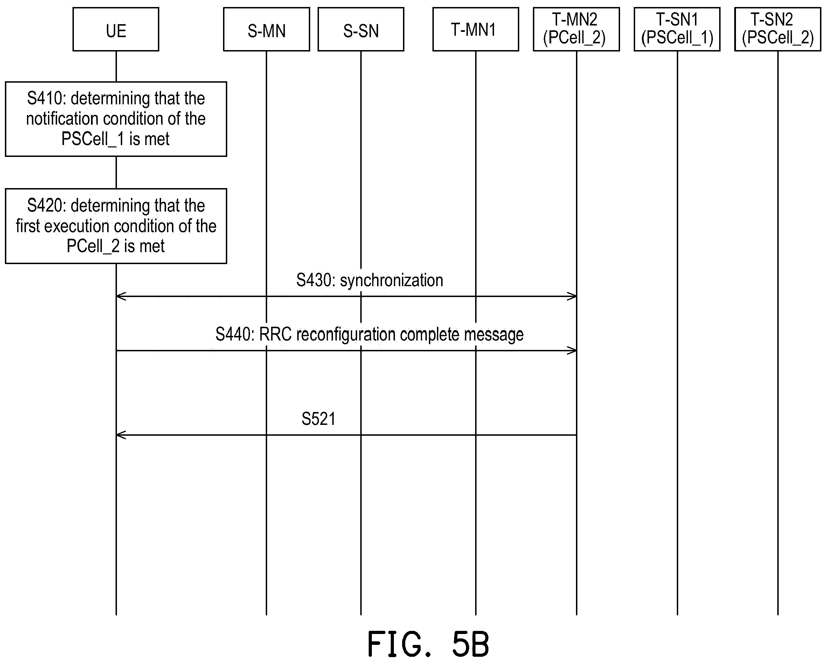

See FIG. 5B, which shows a second schematic diagram according to FIG. 4. In FIG. 5B, it is assumed that the T-MN2 determines not to invite the PSCell_1 to be the SN of the T-MN2, and hence the T-MN2 may send a first message to the UE in step S521 for informing the UE not to perform the PSCell addition execution with respect to the PSCell_1.

In some embodiments, the first message may include the reasons why the T-MN2 disagrees to invite the PSCell_1 to be the SN of the T-MN2, but the disclosure is not limited thereto.

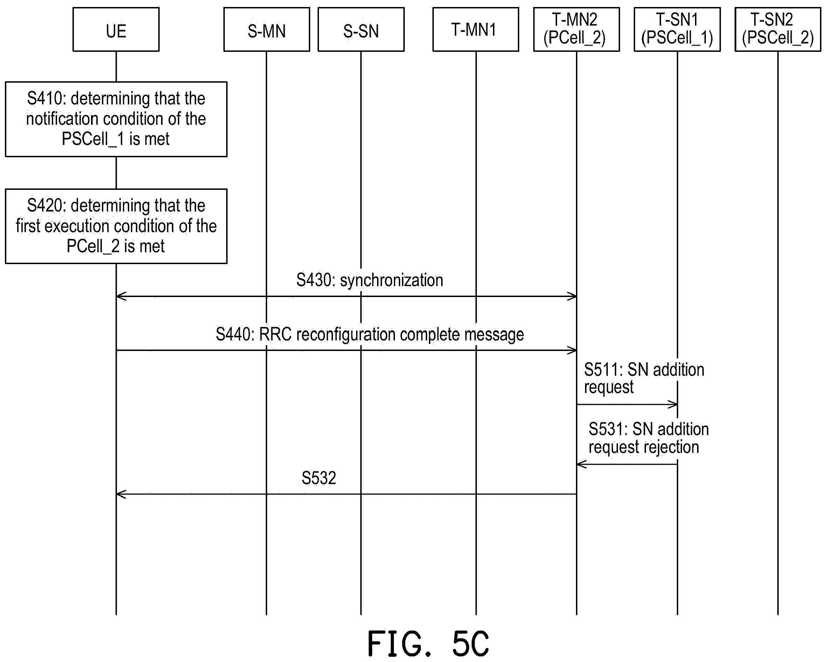

See FIG. 5C, which shows a third schematic diagram according to FIG. 4. In FIG. 5C, it is assumed that the T-MN2 determines to invite the PSCell_1 to be the SN of the T-MN2, and hence the T-MN2 may send the SN addition request to the PSCell_1 in step S511.

However, assuming that the PSCell_1 disagrees to be the SN of the T-MN2, the PSCell_1 may send the SN addition request rejection to the T-MN2 in step S531. In this case, the T-MN2 may send a second message to the UE in step S532 for informing the UE.

In some embodiments, the second message may specify that the PSCell_1 has rejected the SN addition request from the T-MN2, but the disclosure is not limited thereto.

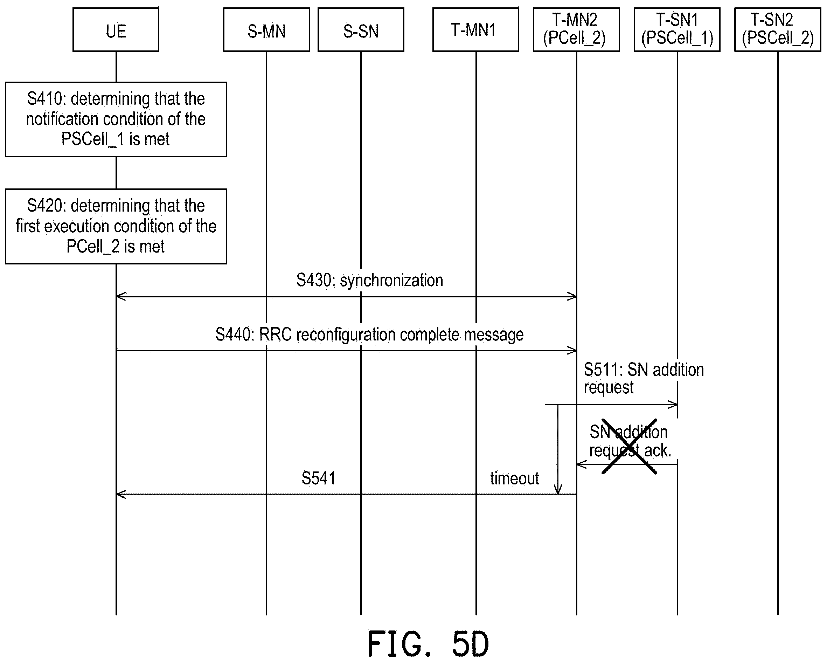

See FIG. 5D, which shows a fourth schematic diagram according to FIG. 4. In FIG. 5D, it is assumed that the T-MN2 determines to invite the PSCell_1 to be the SN of the T-MN2, and hence the T-MN2 may send the SN addition request to the PSCell_1 in step S511.

However, assuming that the PSCell_1 fails to send the corresponding SN addition request acknowledgement back to the T-MN2 within a time duration, the T-MN2 may determine that a timeout situation has occurred. In this case, the T-MN2 may send a third message to the UE in step S541 for informing the UE that the T-MN2 disagrees to add the PSCell_1 as the corresponding SN. In some embodiments, the third message may specify that the PSCell_1 does not provide the corresponding SN addition request acknowledgement within the time duration, but the disclosure is not limited thereto.

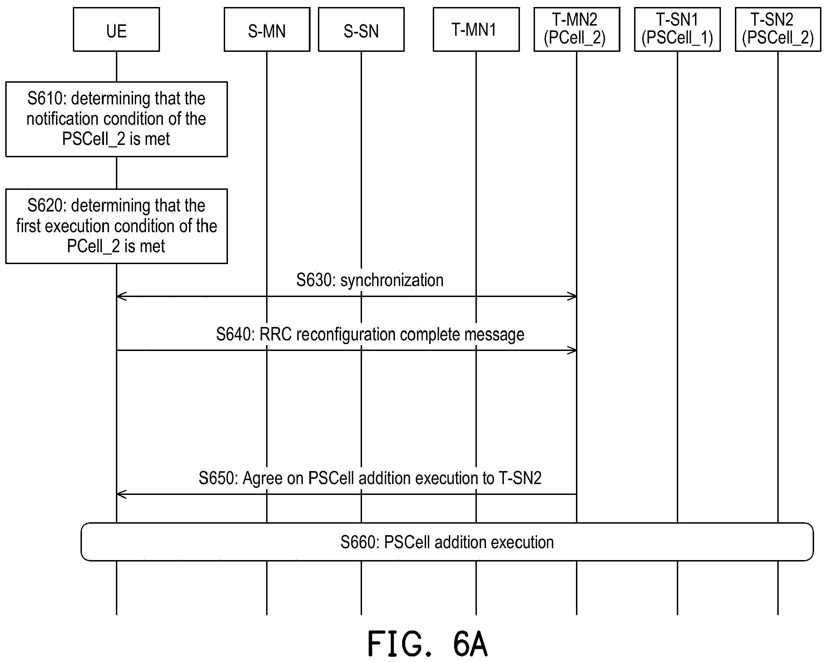

See FIG. 6A, which shows a schematic diagram according to an embodiment of the disclosure. In FIG. 6A, it is assumed that the UE determines that the notification condition of the PSCell_2 is met in step S610. That is, the PSCell_2 can be regarded as the considered candidate PSCell in FIG. 6A.

Next, the UE may determine that the first execution condition of the PCell_2 is met in step S620. In this case, the UE can synchronise to the PCell_2 in step S630 and transmit an RRC reconfiguration complete message to the T-MN2 in step S640.

In the embodiment, the RRC reconfiguration complete message may include the cell identity of the candidate PSCell (e.g., the PSCell_2). In one embodiment, if the UE determines that the notification condition of the candidate PSCell (e.g., PSCell_2) is still met after step S620, the UE may use the RRC reconfiguration complete message to carry the cell identity of the candidate PSCell (e.g., PSCell_2), but the disclosure is not limited thereto. In another embodiment, if the UE determines that the notification condition of the candidate PSCell (e.g., PSCell_2) is still met during performing step S620, the UE may use the RRC reconfiguration complete message to carry the cell identity of the candidate PSCell (e.g., PSCell_2), but the disclosure is not limited thereto.

In one embodiment, if the UE further determines that the notification condition of the PSCell_1 is also met before step S620, the UE can further regard the PSCell_1 as another candidate PSCell and include the cell identity thereof in the RRC reconfiguration complete message, but the disclosure is not limited thereto.

In one embodiment, if the notification condition is shared by the PSCell_1 and PSCell_2, the RRC configuration message may or may not include the notification condition met by the candidate PSCell.

In another embodiment, if the notification condition of each of the PSCell_1 and PSCell_2 is dedicated, the RRC reconfiguration complete message may include the corresponding notification condition of the candidate PSCell, such as the notification condition dedicated to the PSCell_2.

In the embodiments of the disclosure, after the T-MN2 receives the RRC reconfiguration complete message from the UE in step S640, the T-MN2 may know that the candidate PSCell whose notification condition is met is the PSCell_2.

As mentioned in the above, the PCell_2 and the PSCell_2 are associated with each other. In this case, the T-MN2 may (directly) agree with the UE to perform the PSCell addition execution to the T-SN2 to which the PSCell_2 belongs in step S650, and the UE may accordingly perform the PSCell addition execution in step S660.

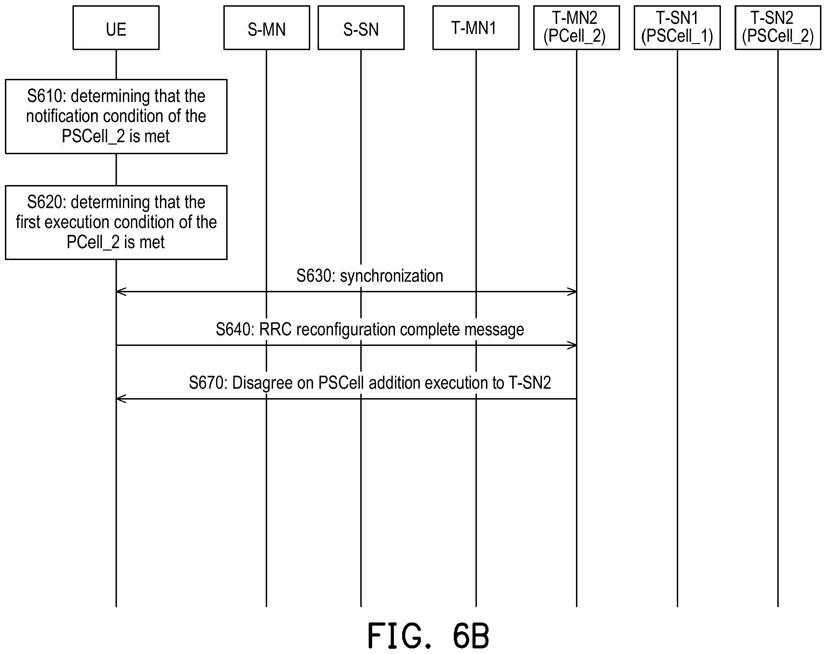

See FIG. 6B, which shows another schematic diagram according to FIG. 6A. In FIG. 6B, steps S610 to S640 can be performed, and the associated details can be referred to the descriptions associated with FIG. 6A.

The difference between FIG. 6A and FIG. 6B is that the T-MN2 may disagree with the UE to perform the PSCell addition execution to the T-SN2 to which the PSCell_2 belongs in step S670. In this case, the UE would not perform the PSCell addition execution to the T-SN2, but the disclosure is not limited thereto.

In some embodiments, the UE can alternatively include a cell identity and at least one of an RSRP, an RSRQ, and an SINR of each of the PSCell_1 and the PSCell_2 in the RRC reconfiguration complete message. In this case, the when the T-MN2 receives the RRC reconfiguration complete message, the T-MN2 may determine whether the notification condition of each of the PSCell_1 and the PSCell_2 is met and accordingly performing the subsequent operations (e.g., sending the SN addition request). That is, the UE does not have to determine whether the notification condition of each of the PSCell_1 and the PSCell_2 is met, but simply provide the RRC reconfiguration complete message (which includes the RSRP, the RSRQ, and/or the SINR of each of the PSCell_1 and the PSCell_2 ) for the T-MN2 to perform the associated determinations accordingly, but the disclosure is not limited thereto.

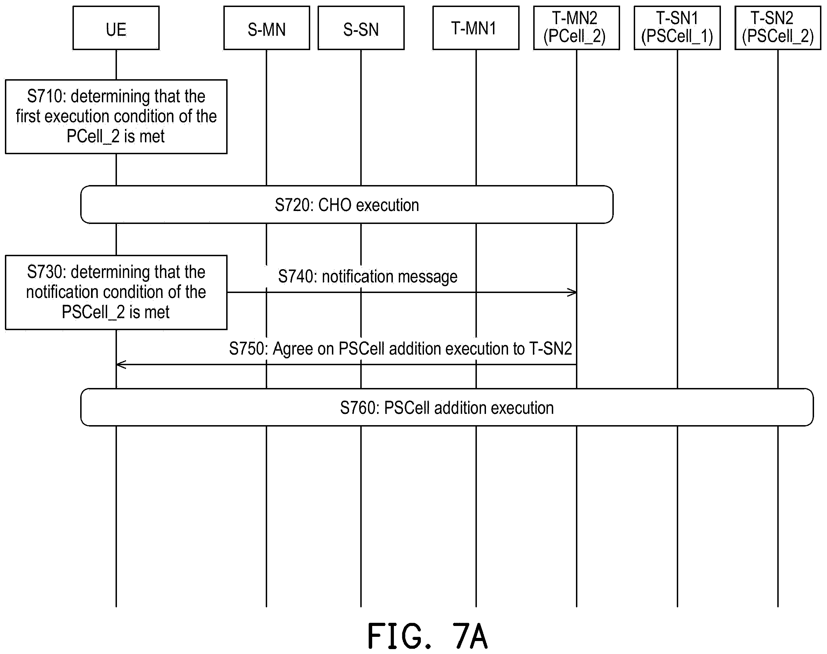

See FIG. 7A, which shows a schematic diagram according to an embodiment of the disclosure. In FIG. 7A, it is assumed that the UE determines that the first execution condition of the PCell_2 is met in step S710. In this case, the UE performs CHO execution in step S720 via, for example, synchronising to the PCell_2 and transmitting the RRC reconfiguration complete message to the T-MN2.

In the embodiment, it is assumed that the UE determines that the notification condition of the PSCell_2 is met in step S730. That is, the PSCell_2 can be regarded as the considered candidate PSCell in FIG. 7A.

However, since the UE has performed the CHO execution in step S720, the UE cannot use the RRC reconfiguration complete message to carry the cell identity of the candidate PSCell (e.g., the PSCell_2) to inform the T-MN2.

In this case, the UE may send a notification message to the T-MN2 in step S740, wherein the notification message may include the cell identity of the candidate PSCell (e.g., the PSCell_2).

In one embodiment, if the notification condition is shared by the PSCell_1 and PSCell_2, the notification message may or may not include the notification condition met by the candidate PSCell.

In another embodiment, if the notification condition of each of the PSCell_1 and PSCell_2 is dedicated, the notification message may include the corresponding notification condition of the candidate PSCell, such as the notification condition dedicated to the PSCell_2.

In the embodiments of the disclosure, after the T-MN2 receives the notification message from the UE in step S740, the T-MN2 may know that the candidate PSCell whose notification condition is met is the PSCell_2.

As mentioned in the above, the PCell_2 and the PSCell_2 are associated with each other. In this case, the T-MN2 may (directly) agree with the UE to perform the PSCell addition execution to the T-SN2 to which the PSCell_2 belongs in step S750, and the UE may accordingly perform the PSCell addition execution in step S770.

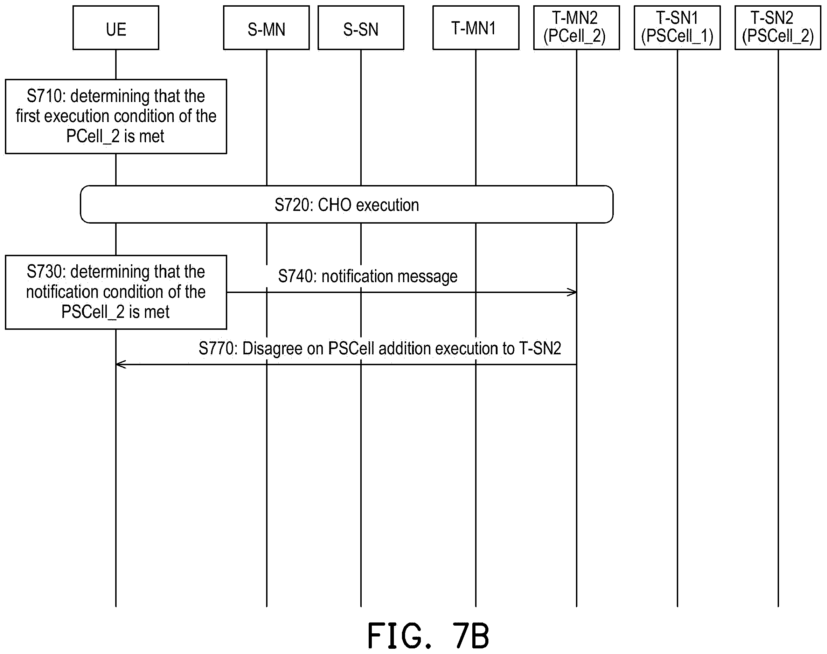

See FIG. 7B, which shows another schematic diagram according to FIG. 7A. In FIG. 7B, steps S710 to S740 can be performed, and the associated details can be referred to the descriptions associated with FIG. 7A.

The difference between FIG. 7A and FIG. 7B is that the T-MN2 may disagree with the UE to perform the PSCell addition execution to the T-SN2 to which the PSCell_2 belongs in step S770. In this case, the UE would not perform the PSCell addition execution to the T-SN2, but the disclosure is not limited thereto.

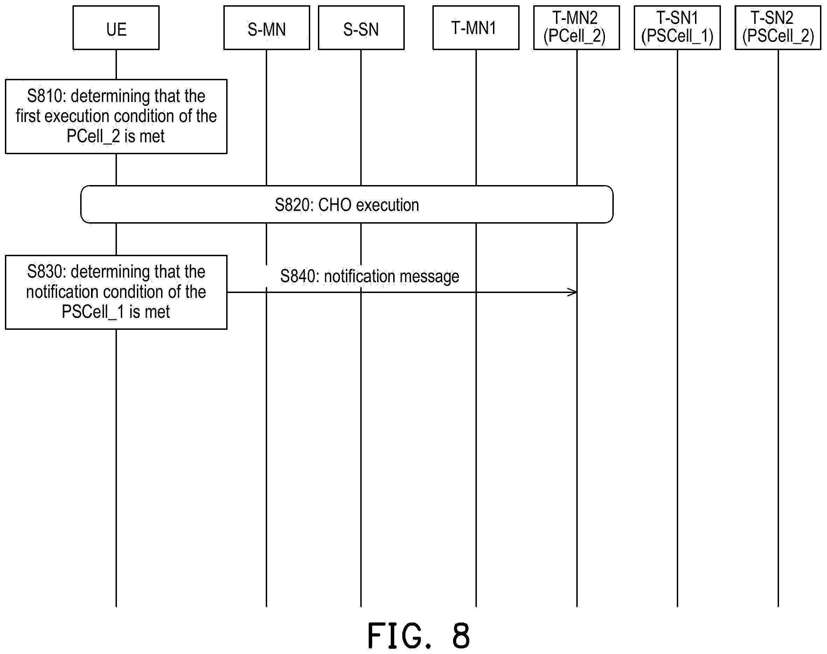

See FIG. 8, which shows a schematic diagram according to an embodiment of the disclosure. In FIG. 8, it is assumed that the UE determines that the first execution condition of the PCell_2 is met in step S810. In this case, the UE performs CHO execution in step S820 via, for example, synchronising to the PCell_2 and transmitting the RRC reconfiguration complete message to the T-MN2.

In the embodiment, it is assumed that the UE determines that the notification condition of the PSCell_1 is met in step S830. That is, the PSCell_1 can be regarded as the considered candidate PSCell in FIG. 8.

However, since the UE has performed the CHO execution in step S820, the UE cannot use the RRC reconfiguration complete message to carry the cell identity of the candidate PSCell (e.g., the PSCell_1) to inform the T-MN2.

In this case, the UE may send a notification message to the T-MN2 in step S840, wherein the notification message may include the cell identity of the candidate PSCell (e.g., the PSCell_1).

In one embodiment, if the notification condition is shared by the PSCell_1 and PSCell_2, the notification message may or may not include the notification condition met by the candidate PSCell.

In another embodiment, if the notification condition of each of the PSCell_1 and PSCell_2 is dedicated, the notification message may include the corresponding notification condition of the candidate PSCell, such as the notification condition dedicated to the PSCell_1.

In the embodiments of the disclosure, after the T-MN2 receives the notification message from the UE in step S840, the T-MN2 may know that the candidate PSCell whose notification condition is met is the PSCell_1.

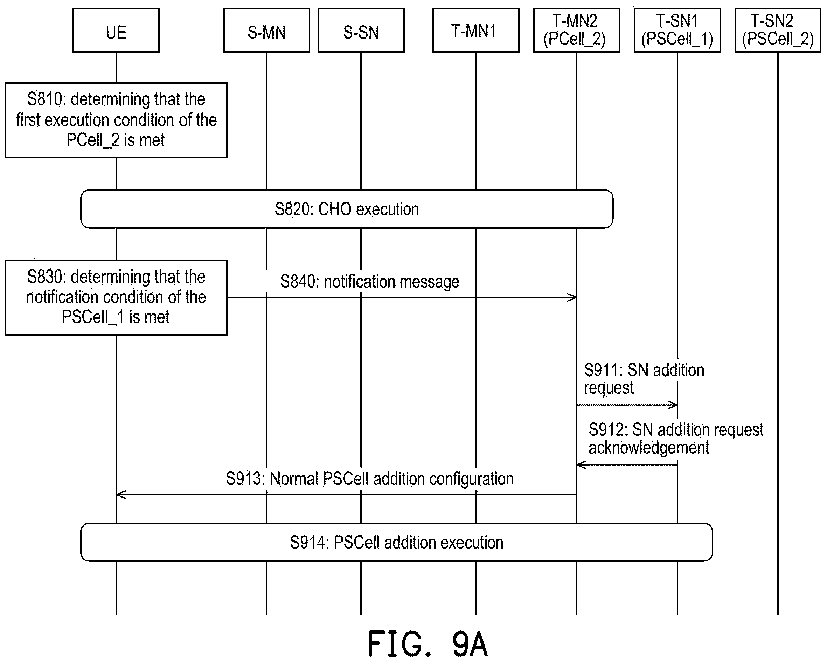

As mentioned in the above, the PSCell associated with the PCell_2 is the PSCell_2 instead of the PSCell_1 indicated in the notification message. In this case, the T-MN2 may determine whether to invite the PSCell_1 to be the SN of the T-MN2, and the T-MN2 may perform subsequent operations according to the corresponding determination result, which would be discussed with FIG. 9A to FIG. 9D.

See FIG. 9A, which shows a first schematic diagram according to FIG. 8. In FIG. 9A, it is assumed that the T-MN2 determines to invite the PSCell_1 to be the SN of the T-MN2, and hence the T-MN2 may send the SN addition request to the PSCell_1 in step S911.

Assuming that the PSCell_1 agrees to be the SN of the T-MN2, the PSCell 1 may send the SN addition request acknowledgement to the T-MN2 in step S912. In this case, the T-MN2 may provide the corresponding normal PSCell addition configuration to the UE in step S913, and the UE may perform the PSCell addition execution in step S914 accordingly.

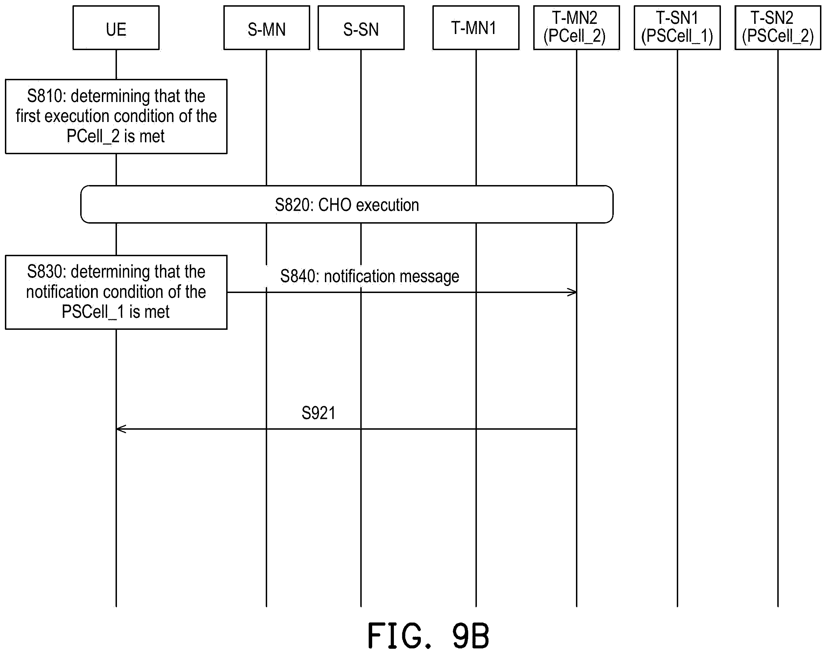

See FIG. 9B, which shows a second schematic diagram according to FIG. 8. In FIG. 9B, it is assumed that the T-MN2 determines not to invite the PSCell_1 to be the SN of the T-MN2, and hence the T-MN2 may send a first message to the UE in step S921 for informing the UE not to perform the PSCell addition execution with respect to the PSCell_1.

In some embodiments, the first message may include the reasons why the T-MN2 disagrees to invite the PSCell_1 to be the SN of the T-MN2, but the disclosure is not limited thereto.

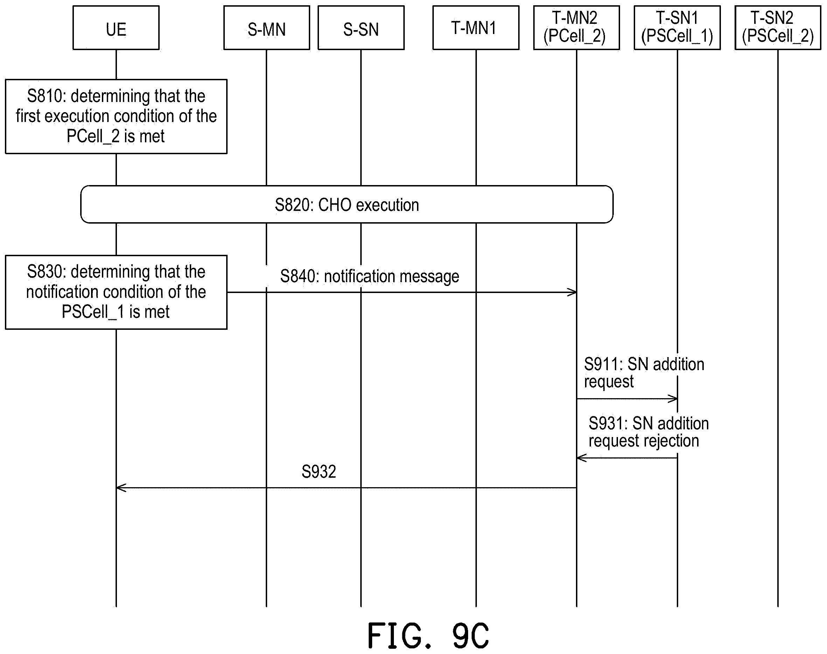

See FIG. 9C, which shows a third schematic diagram according to FIG. 8. In FIG. 9C, it is assumed that the T-MN2 determines to invite the PSCell_1 to be the SN of the T-MN2, and hence the T-MN2 may send the SN addition request to the PSCell_1 in step S911.

However, assuming that the PSCell_1 disagrees to be the SN of the T-MN2, the PSCell_1 may send the SN addition request rejection to the T-MN2 in step S931. In this case, the T-MN2 may send a second message to the UE in step S932 for informing the UE.

In some embodiments, the second message may specify that the PSCell_1 has rejected the SN addition request from the T-MN2, but the disclosure is not limited thereto.

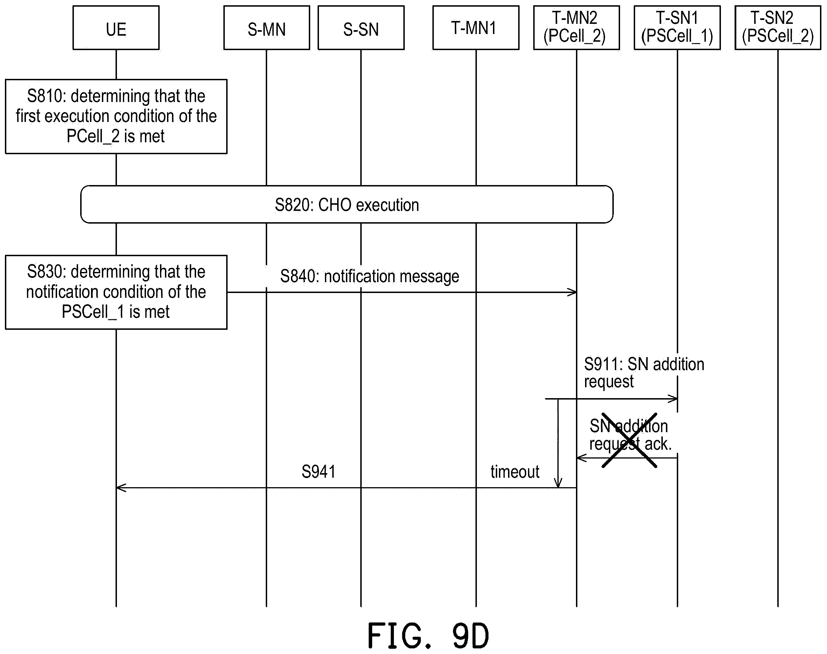

See FIG. 9D, which shows a fourth schematic diagram according to FIG. 8. In FIG. 9D, it is assumed that the T-MN2 determines to invite the PSCell_1 to be the SN of the T-MN2, and hence the T-MN2 may send the SN addition request to the PSCell_1 in step S911.

However, assuming that the PSCell_1 fails to send the corresponding SN addition request acknowledgement back to the T-MN2 within a time duration, the T-MN2 may determine that a timeout situation has occurred. In this case, the T-MN2 may send a third message to the UE in step S941 for informing the UE that the T-MN2 disagrees to add the PSCell_1 as the corresponding SN. In some embodiments, the third message may specify that the PSCell_1 does not provide the corresponding SN addition request acknowledgement within the time duration, but the disclosure is not limited thereto.

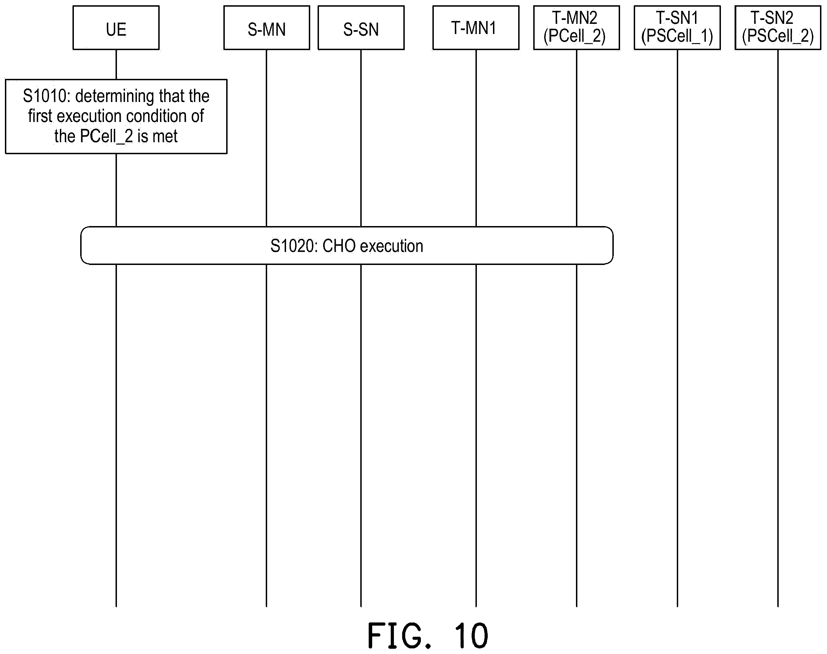

See FIG. 10, which shows a schematic diagram according to an embodiment of the disclosure. In FIG. 10, in response to determining that the first execution of the PCell_2 is met in step S1010, the UE can (directly) perform the CHO execution in step S1020.

In another embodiment, in response to determining that the first execution of the PCell_1 is met, the UE would also (directly) perform the corresponding CHO execution. That is, the UE would not delay the corresponding CHO execution once the first execution of any of the candidate PCells is met.

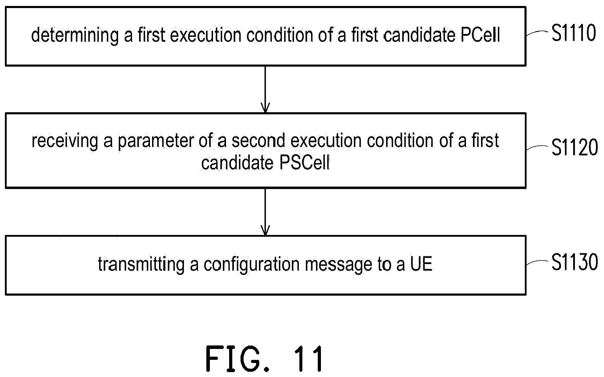

See FIG. 11, which shows a flow chart of the method of handling conditional handover with a candidate SCG according to an embodiment of the disclosure. The method of this embodiment may be executed by the S-MN.

In step S1 110, the S-MN determines a first execution condition of a first candidate PCell. In step S1120, the S-MN receives a parameter of a second execution condition of a first candidate PSCell. In step S1130, the S-MN transmits a configuration message to a UE. The details of each step in FIG. 11 can be referred to the above embodiments, which would not be repeated herein.

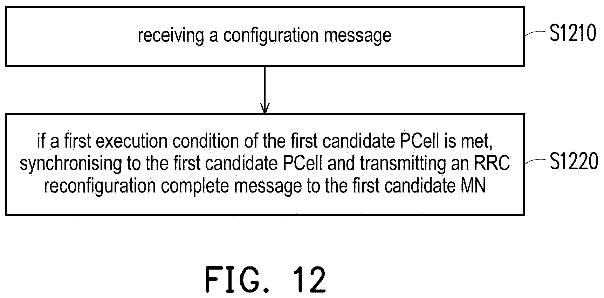

See FIG. 12, which shows a flow chart of the method of handling conditional handover with a candidate SCG according to another embodiment of the disclosure. The method of this embodiment may be executed by the UE.

In step S1210, the UE receives a configuration message. In step S1220, if a first execution condition of the first candidate PCell is met, the UE synchronises to the first candidate PCell and transmits an RRC reconfiguration complete message to the first candidate MN. The details of each step in FIG. 12 can be referred to the above embodiments, which would not be repeated herein.

To sum up, the embodiments of the disclosure provide a solution for establishing a robust DC by taking the radio link conditions of candidate PSCells into consideration while not delaying CHO execution.

## Claims

1. A method of handling conditional handover with a candidate secondary cell group, SCG, applied to a source master node, MN, **characterized in** comprising:
determining (S1110), by the source MN, a first execution condition of a first candidate primary cell, PCell; and
receiving (S1120), by the source MN from a first candidate MN, a parameter of a second execution condition of a first candidate primary SCG cell, PSCell.

2. The method as claimed as in claim 1, further comprising:
providing, by the source MN, the first execution condition of the first candidate PCell.

3. The method as claimed as in claim 2, further comprising:
providing, by the source MN, the second execution condition of the first candidate PSCell.

4. The method as claimed as in claim 2, wherein the step of providing the first execution condition of the first candidate PCell comprises:
transmitting (S1130), by the source MN to a user equipment, UE, a configuration message, wherein the configuration message comprises the first execution condition of the first candidate PCell.

5. The method as claimed as in claim 4, wherein the configuration message further comprises the second execution condition of the first candidate PSCell.

6. The method as claimed as in claim 4, wherein the configuration message is a radio resource control, RRC, reconfiguration message.

7. The method as claimed as in claim 4, further comprising:
receiving, by the source MN from the first candidate MN, a first configuration of the first candidate PSCell; and
including, by the source MN, the first configuration of the first candidate PSCell in the configuration message.

8. The method as claimed as in claim 1, wherein the parameter of the second execution condition comprises at least one of a threshold value associated with a trigger quantity and an offset value, wherein the trigger quantity comprises at least one of a Reference Signal Received Power, RSRP, a Reference Signal Received Quality, RSRQ, and a Signal to Interference plus Noise Ratio, SINR.

9. The method as claimed as in claim 5, wherein the first execution condition and the second execution condition in the configuration message enable the UE to determine whether to perform a conditional handover to the first candidate PCell and whether to change a serving PSCell to the first candidate PSCell or add the first candidate PSCell as the serving PSCell.

10. The method as claimed as in claim 1, wherein the first candidate PCell belongs to the first candidate MN, and the first candidate PCell is associated with the first candidate PSCell.

11. A source master node, MN, **characterized in** comprising:
a transceiver (102);
a processor (104), coupled to the transceiver (102) and performing:
determining (S110) a first execution condition of a first candidate primary cell, PCell;
controlling the transceiver to receive (S1120), from a first candidate MN, a parameter of a second execution condition of a first candidate primary secondary cell group, SCG, cell, PSCell; and
transmitting (51130) a configuration message to a user equipment, UE, wherein the configuration message comprises the first execution condition of the first candidate PCell.

12. The source master node as claimed as in claim 11, wherein the configuration message further comprises the second execution condition of the first candidate PSCell.

13. A method of handling conditional handover with a candidate secondary cell group, SCG, applied to a user equipment, UE, **characterized in** comprising:
receiving (S1210), by the UE, a configuration message, wherein the configuration message comprises at least one first execution condition of at least one candidate primary cell, PCell, wherein the at least one candidate PCell comprises a first candidate PCell, and the first candidate PCell belongs to a first candidate MN.

14. The method as claimed as in claim 13, wherein the configuration message further comprises at least one second execution condition of at least one candidate primary SCG cell, PSCell.

15. The method as claimed as in claim 13, further comprising:
if a first execution condition of the first candidate PCell is met, synchronising, by the UE, to the first candidate PCell and transmitting a radio resource control, RRC, reconfiguration complete message to the first candidate MN.

16. The method as claimed as in claim 15, further comprising:
if the first execution condition of the first candidate PCell is met and the configuration message does not comprise at least one second execution condition of at least one candidate primary SCG cell, PSCell, or no second execution condition of any of the at least one candidate PSCell is met, synchronising to the first candidate PCell and transmitting the RRC reconfiguration complete message to the first candidate MN.

17. The method as claimed as in claim 14, wherein the at least one candidate PSCell comprises a first candidate PSCell associated with the first candidate PCell, and the method further comprises:
evaluating, by the UE, a first execution condition of the first candidate PCell and a second execution condition of the first candidate PSCell.

18. The method as claimed as in claim 13, further comprising:
if a second execution condition of a first candidate PSCell is met and no first execution condition of any of the at least one candidate PCell is met, evaluating, by the UE, the at least one first execution condition of the at least one candidate PCell and the at least one second execution condition of the at least one candidate PSCell.

19. The method as claimed as in claim 17, further comprising:
if the first execution condition of the first candidate PCell is met and the second execution condition of the first candidate PSCell is met, applying a first configuration of the first candidate PSCell and a second configuration of the first candidate PCell.

20. The method as claimed as in claim 13, further comprising:
if a notification condition of a candidate PSCell among at least one candidate PSCell is met, providing, by the UE, a cell identity of the candidate PSCell.

21. The method as claimed as in claim 20, further comprising:
if a first execution condition of the first candidate PCell is met, synchronising, by the UE, to the first candidate PCell and transmitting a radio resource control, RRC, reconfiguration complete message to the first candidate MN; and
in response to the notification condition of the candidate PSCell is met, including the cell identity of the candidate PSCell in the RRC reconfiguration complete message.

22. The method as claimed as in claim 20, wherein the notification condition is shared by the at least one candidate PSCell.

23. The method as claimed as in claim 20, wherein the notification condition is a dedicated condition to the candidate PSCell, wherein the dedicated condition includes a second execution condition of the candidate PSCell.

24. The method as claimed as in claim 21, wherein the RRC reconfiguration complete message further comprises the notification condition of the candidate PSCell if the notification condition is a dedicated condition to the candidate PSCell.

25. The method as claimed as in claim 20, further comprising:
in response to the notification condition of the candidate PSCell is met, including the cell identity of the candidate PSCell in a notification message transmitted to the first candidate MN.

26. The method as claimed as in claim 25, wherein the notification message further comprises the notification condition of the candidate PSCell if the notification condition is a dedicated condition to the candidate PSCell.

27. The method as claimed as in claim 15, further comprising:
including a cell identity and at least one of a Reference Signal Received Power, RSRP, a Reference Signal Received Quality, RSRQ, and a Signal to Interference plus Noise Ratio, SINR, of each of at least one candidate primary SCG cell, PSCell, in the RRC reconfiguration complete message.

28. A user equipment, UE, **characterized in** comprising:
a transceiver (102);
a processor (104), coupled to the transceiver (102) and performing:
controlling the transceiver to receive (S1210) a configuration message, wherein the configuration message comprises at least one first execution condition of at least one candidate primary cell, PCell, wherein the at least one candidate PCell comprises a first candidate PCell, and the first candidate PCell belongs to a first candidate MN; and
if a first execution condition of the first candidate PCell is met, synchronising (S1220) to the first candidate PCell and transmitting a radio resource control, RRC, reconfiguration complete message to the first candidate MN.
